(19) Europäisches Patentamt
European Patent Office
Office européen des brevets

(11) **EP 4 298 382 B1**

(12) **EUROPEAN PATENT SPECIFICATION**

(45) Date of publication and mention
of the grant of the patent:
**02.04.2025  Bulletin 2025/14**

(21) Application number: **22709906.6**

(22) Date of filing: **24.02.2022**

(51) International Patent Classification (IPC):
**F23R 3/14** *(2006.01)*    **F23R 3/28** *(2006.01)*
**F23R 3/36** *(2006.01)*    **F23D 14/08** *(2006.01)*

(52) Cooperative Patent Classification (CPC):
**F23R 3/36; F23D 14/02; F23D 14/24; F23R 3/14;
F23R 3/286;** F23C 2900/9901; F23R 2900/00002

(86) International application number:
**PCT/US2022/017674**

(87) International publication number:
**WO 2022/182853 (01.09.2022 Gazette 2022/35)**

(54) **METHOD OF INJECTING HYDROGEN INTO A COMBUSTION CHAMBER OF A COMBUSTOR OF
A GAS TURBINE SYSTEM**

VERFAHREN ZUM EINSPRITZEN VON WASSERSTOFF IN EINE BRENNKAMMER EINES
BRENNERS EINES GASTURBINENSYSTEMS

MÉTHODE POUR L'INJECTION D'HYDROGÈNE DANS UNE CHAMBRE DE COMBUSTION D'UNE
CHAMBRE DE COMBUSTION D'UN SYSTÈME DE TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2021  US 202163153620 P
23.02.2022  US 202217678134**

(43) Date of publication of application:
**03.01.2024  Bulletin 2024/01**

(73) Proprietor: **Air Products and Chemicals, Inc.
Allentown, PA 18106-5500 (US)**

(72) Inventors:
• **D'AGOSTINI, Mark Daniel
Allentown, PA 18104 (US)**
• **SANE, Anup Vasant
Allentown, PA 18104 (US)**

(74) Representative: **Kador & Partner Part mbB
Corneliusstraße 15
80469 München (DE)**

(56) References cited:
**EP-A- 0 918 093          EP-A1- 2 902 708
US-A1- 2013 019 584    US-A1- 2017 198 905
US-A1- 2019 078 777**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This application claims priority to U.S. Patent Application No. 17/678,134, filed on February 23, 2022 and also claims priority to U.S. Provisional Patent Application No. 63/153,620, filed on February 25, 2021.

FIELD

The present invention relates to a method of injecting hydrogen into a combustion chamber of a combustor of a gas turbine system.

BACKGROUND

A gas turbine arrangement commonly used for industrial power generation is illustrated in Figure 1. As can be appreciated from International Publication No. WO 2019/222334, this arrangement can conventionally include a cold section characterized by a compressor, followed by a hot section that has a combustor section and a turbine. The cold section often includes an air intake for feeding air to a multi-stage axial flow compressor that delivers high pressure air to the combustor section. A fuel can be mixed with the air flow and combusted in the combustion section to produce a high temperature, high pressure gas stream that is to be fed to the turbine. The turbine is downstream of the combustor section and is configured to receive the hot combustion gas from the combustor section and expand that flow of gas as the gas passes through the turbine, which spins the rotating blades of the turbine. Often, the rotating blades of the turbine are attached to a shaft to rotate the shaft to perform a dual function: (1) help drive the compressor to draw more pressurized air into the combustor section, and (2) spin a generator to produce electricity. The operating pressure ratio of the turbine, which is defined as the pressure of the air at the compressor exit to that of the air at the compressor intake, is normally less than about 18:1.

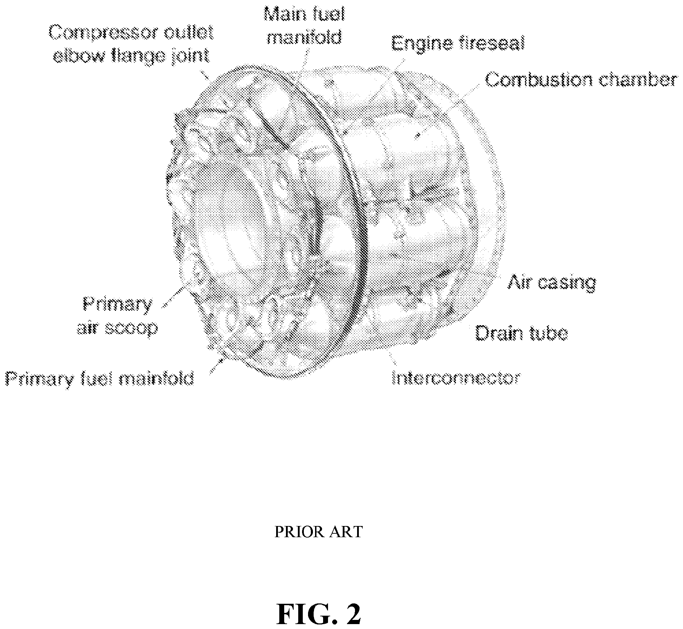

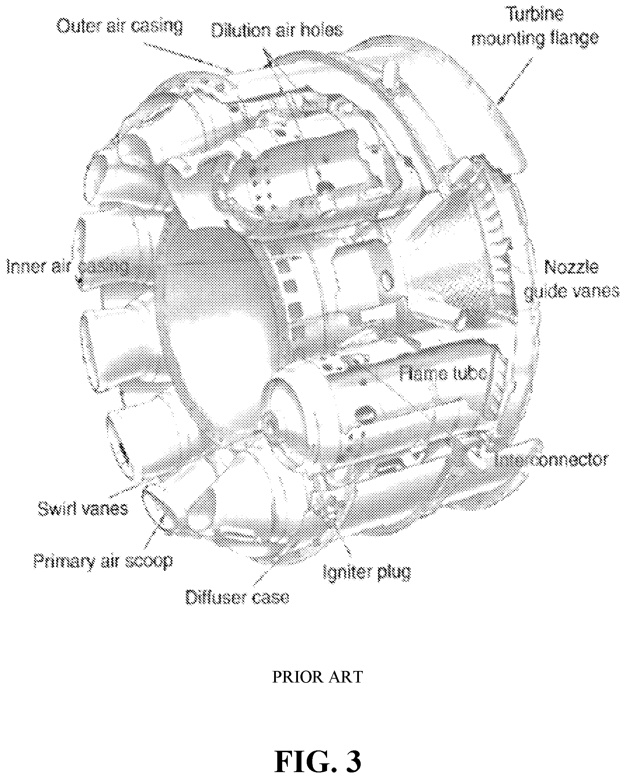

While combustor designs vary based on manufacturer, size, and application, many, particularly those of the multiple-can type (an example of which is shown in Figure 2), and the can-annular type (an example of which is shown in Figure 3), carry out combustion via an array of cylindrical tubes or "cans" disposed circumferentially around the turbine shaft. In the multiple-can type combustor, each can's air intake is mechanically coupled to a corresponding outlet port of the compressor. In contrast, the can-annular type combustor is typically configured so that each can's air intake is open to a common single annulus connected to the compressor outlet. In either case, products of combustion are discharged from each can through a transition duct where they are then distributed around a 360° arc into the first stage of the turbine.

Each can combustor typically has a combustor chamber fed by one or more air-fuel nozzles disposed about the circumference of an inlet plane of the can combustor in an annular configuration. The air-fuel nozzles introduce a mixture of air and fuel into the combustor chamber. In many cases, an air-fuel pilot burner is additionally disposed along the combustor axis. The air-fuel pilot burner, which is employed to enhance combustion stability, may be of either a pre-mix design or a nozzle-mix (i.e., diffusion or non-pre- mix) design. The combination of premix nozzles and pilot burner is often collectively referred to as a burner, and each can combustor usually includes its own burner or group of burners. Typically, a premix nozzle includes a fuel injector that discharges fuel into a corresponding air stream. Often, the nozzle is arranged as an annular nozzle that includes one or more fuel injectors arranged in an annular configuration surrounded by an air annulus around a central air- fuel pilot burner. The burner helps combust the mixture of air and fuel injected into the combustion chamber of a can of the combustion section to form the hot gas for feeding to the turbine.

EP 2 902 708 A1 discloses a multifuel gas turbine combustor capable of combusting gases containing hydrogen in a high concentration with a low NOx while maintaining a low emission performance brought about by the pre-mixture combustion in the main burner. The gas turbine combustor includes a main burner (12) for supplying to and combusting a premixed gas (M), containing a first fuel (F1), within a first combustion region (S1) of a combustion chamber (10), and a supplemental burner (20) for supplying to and combusting a second fuel (F2) of a composition different from that of the first fuel (F1) within a second combustion region (S2) defined downstream of the first combustion region (S1) within the combustion chamber (10).

SUMMARY

It is desirable for environmental reasons to run a gas turbine system so that ist combustors or combustor section operate using lean combustion. The use of lean combustion can refer to a condition in which there is excess air, or oxygen, for combustion relative to the fuel fed to the combustion chamber for combustion. Operating in a lean combustion condition can help reduce nitrous oxide (NOx) formation, which results in a more environmentally friendly exhaust to be output from the gas turbine system. However, lean combustion operation can result in instabilities. These instabilities can result in combustor pressure oscillations, which can also be referred to as vibrations, due to the lack of sufficient uniformity in a continuous burn, or combustion of the fuel. The oscillations, or vibrations, which can be caused from these instabilities, can cause mechanical damage to the gas turbine system. We have determined that such a problem can be better addressed by improving lean combustion stability to greatly reduce combustion instability issues. The reduction of combustion instability can greatly reduce combustor oscillations or vibrations to prolong the life of gas system components and improve operational performance of the gas turbine system. In some embodiments, a flow of hydrogen ($H_2$) gas can be injected into a first wake region of an air-fuel injector (also called air-fuel burner) within a combustion chamber that is formed downstream of where a swirled air-fuel stream was fed into the combustion chamber via a premix burner nozzle. The hydrogen can be injected so that the first wake region interacts with one or more second wakes of a secondary wake region formed between the location at which the hydrogen is injected into the combustion chamber and the first wake region within the combustion chamber. The injection of the hydrogen can form at least one second wake in the combustion chamber via combustion of the injected hydrogen. The one or more second wakes can be formed between the hydrogen injector and the first wake region as well as between the outlet of the hydrogen injector and a position at which a swirling flow of the mixture of fuel and air crosses a discharge plane of the outlet for hydrogen injection. This can result in an interaction between one or more first wakes of the first wake region and one or more second wakes that can facilitate improved combustion stability as a consequence of the combustion of hydrogen interacting with combustion gases of the first wakes. This interaction can include, for example, activated gas in the one or more first wakes from combustion of fuel communicating heat and active chemical species with the one or more second wakes.

We have determined that the injection of hydrogen into a region of hot excess air can often, if not always, result in the rapid ignition of hydrogen for combusting the hydrogen. We believe this is due to the relatively high chemical reactivity of hydrogen, its wide range of flammability and elevated flame temperature. We have determined that the injection of hydrogen into the combustion chamber and its resultant combustion, can initiate a flame-stabilizing chain reaction that can subdue combustion driven oscillations that can occur within a combustion chamber during the combustion of the fuel therein. We have determined that this is particularly applicable to embodiments in which the injection of the hydrogen gas occurs at a location within the combustion chamber that is adjacent to a swirled air-fuel mixture output from a nozzle, while also being separated from this swirled air-fuel mixture output and being positioned downstream of the output flow of the air-fuel mixture output from the nozzle so that the injected hydrogen can interact with the fuel and air within the combustion chamber in a wake region within the combustion chamber.

A method of injecting hydrogen into a combustion chamber of a combustor of a gas turbine system according to the invention is defined in claim 1.

The method can be utilized so that the at least one central jet of hydrogen is injected into a secondary wake region within the combustion chamber that is downstream of the outlet of the inner hydrogen injection conduit and upstream of a position within the combustion chamber at which the mixture of fuel and air output from the outlet of the outer conduit crosses a discharge region of the outlet of the inner hydrogen injection conduit within the combustion chamber. The crossing of the discharge region can include passing through the discharge region, entering the discharge region, and/or moving along the discharge region. In at least some version of this aspect the at least one central jet of hydrogen can be injected at a velocity of at least 100 m/s.

The method can also include generating a swirl of air via at least one swirler to generate a swirling flow for the mixture of air and fuel prior to outputting the mixture of air and fuel from the outlet of the outer conduit. In such an aspect, or in conjunction with the fifteenth and/or sixteenth aspects, the secondary wake region can be between the outlet of the inner hydrogen injection conduit and the position within the combustion chamber at which the mixture of fuel and air output from the outlet of the outer conduit crosses the outlet of the inner hydrogen injection conduit while the fuel of the mixture combusts in the combustion chamber.

The method can be employed such that the outlet of the inner hydrogen injection conduit is a single orifice and the inner hydrogen injection conduit has at least one cavity upstream of the single orifice.

The at least one cavity can have a depth, a cavity length, and a cavity trailing edge distance, which is a distance a downstream end of the cavity is from the outlet of the inner hydrogen injection conduit. The cavity depth can be greater than or equal to a radius of the orifice of the outlet of the inner hydrogen injection conduit and also be less than or equal to a diameter of the orifice of the outlet of the inner hydrogen injection conduit, the cavity length can be a value so that a ratio of the length to the depth is between 1 and 4, and the cavity trailing edge distance can be a value so that a ratio of the cavity trailing edge distance to the diameter is no more than 5. Of course, the at least one cavity in a nineteenth aspect can be structured to have other parameters for the cavity length, depth, and trailing edge distance parameters that differ from these parameters as well.

The method can be employed in situations where the outlet of the inner hydrogen injection conduit includes a nozzle with at least one central orifice to form the at least one central jet of hydrogen to inject hydrogen into the combustion chamber and multiple outer orifices to form multiple non-central jets of hydrogen to inject hydrogen into the combustion chamber. The method can also include injecting the non-central jets of hydrogen into the combustion chamber via the outer orifices of the nozzle. In some embodiments, the one or more central jets of hydrogen can flow in an axial direction while the non-central jets of hydrogen flow in a non-axial direction. The injection of the non-central jets can be performed so they are injected into a secondary wake region within the combustion chamber that is downstream of the outlet of the inner hydrogen injection conduit and upstream of a region within the combustion chamber at which the mixture of fuel and air output from the outlet of the outer conduit crosses a discharge region of the outlet of the inner hydrogen injection conduit within the combustion chamber. The crossing of the discharge region can include passing through this discharge region, entering the discharge region, and/or moving along the discharge region. The outer orifices can be configured so that each of the non-central jets of hydrogen are output in a flow direction that flows at an angle to a flow direction of the at least one central jet of hydrogen. This angle can be greater than 0° and less than 90°, greater than 15° and less than 60°, or within another range to meet a particular set of design criteria. The at least one central jet of hydrogen can be injected at a velocity of at least 100 m/s and each of the non-central jets of hydrogen can be injected at a velocity that is at least 100 m/s. The recirculation gas flow rate ($m,recirc$) can be a function of the main premix burner swirl number and average axial injection velocity that may either be estimated by empirical correlation (available in the public domain) or via computational fluid dynamics modeling. The outer conduit and/or the inner hydrogen injection conduit are portions of the burner of the combustor.

Another method according to the invention is defined in claim 11.


BRIEF DESCRIPTION OF THE DRAWINGS

Exemplary embodiments of gas turbines, injection devices for combustion chambers in a gas turbine system, operation of gas turbines, operation of injectors for combustion used in conjunction with a gas turbine system, plants utilizing one or more gas turbine systems, and methods of making and using the same are shown in the drawings included herewith. It should be understood that like reference characters used in the drawings may identify like components.

Figure 1 is a side cross-sectional view of a conventional gas turbine arrangement that can be utilized for industrial power generation.

Figure 2 is a front perspective view of a multiple-can combustor section of the gas turbine arrangement shown in Figure 1.

Figure 3 is a front perspective view of a can-annular combustor section of the gas turbine arrangement shown in Figure 1. Portions of the combustor section are cut away to better illustrate certain internal components of the section.

Figure 4 is a schematic view of a first exemplary embodiment of a hydrogen injection arrangement for inclusion in a combustion section of a gas turbine system.

Figure 5 is a schematic view of the first exemplary embodiment of a hydrogen injection arrangement for inclusion in a combustion section of a gas turbine system. Figure 5 is similar to Figure 4, but further illustrates an exemplary fuel feeding system that can be included in the gas turbine system for feeding fuel to the combustor as well as mixing a portion of the fuel with air to premix the air and fuel before the mixture of air and fuel is output to the combustion chamber 2a via the burner 4.

Figure 6 is a fragmentary schematic view of the first exemplary embodiment of the hydrogen injection arrangement shown in Figures 4-5, which is enlarged to illustrate certain aspects of the hydrogen flow injector of the hydrogen injection arrangement.

Figure 7 is an end view of a first exemplary injector outlet arrangement for injecting hydrogen into the combustion chamber 2a at the same time an air-fuel mixture is fed to the combustion chamber 2a that can be utilized in the first exemplary embodiment of the hydrogen injection arrangement.

Figure 8 is an end view of a second exemplary injector outlet arrangement for injecting hydrogen into the combustion chamber 2a at the same time an air-fuel mixture is fed to the combustion chamber 2a that can be utilized in the first exemplary embodiment of the hydrogen injection arrangement.

Figure 9 is an end view of a third exemplary injector outlet arrangement for injecting hydrogen into the combustion chamber 2a at the same time an air-fuel mixture is fed to the combustion chamber 2a that can be utilized in the first exemplary embodiment of the hydrogen injection arrangement.

Figure 10 is an end view of a fourth exemplary injector outlet arrangement for injecting hydrogen into the combustion chamber 2a at the same time an air-fuel mixture is fed to the combustion chamber 2a that can be utilized in the first exemplary embodiment of the hydrogen injection arrangement.

Figure 11 is a perspective end view of an exemplary injector outlet configuration for injecting hydrogen into the combustion chamber 2a that can be included in the first exemplary embodiment of the hydrogen injection arrangement illustrated in Figures 4-6.

Figure 12 is a cross-sectional view taken along line A-A in Figure 11 of the exemplary injector outlet configuration shown in Figure 11.

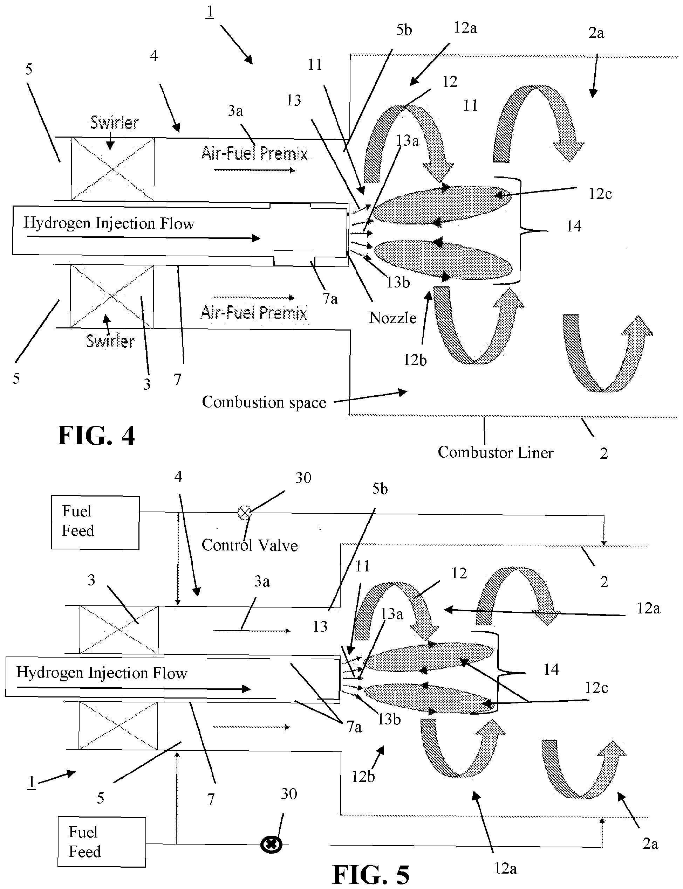

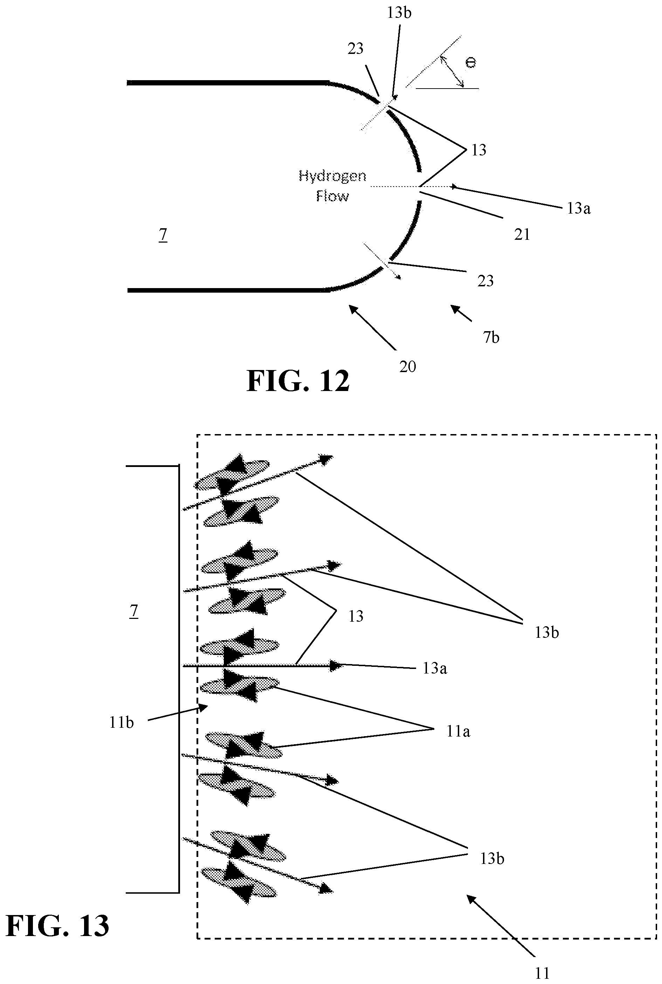

Figure 13 is an enlarged schematic view of the exemplary secondary wake zone formed within the combustion chamber 2a illustrated in Figures 4 and 5 to better illustrate the exemplary ignition of a hydrogen jet or hydrogen jets 13 that, once ignited, can be passed through this secondary wake region 11 as the injected hydrogen undergoes combustion in this region adjacent to a position within the discharge region 14 at which the mixture of air and fuel output from the outlet 5b of the outer conduit 5 crosses the discharge region 14 of the outlet 7b of the inner hydrogen injection conduit 7 within the combustion chamber 2a.

Figure 14 is a schematic flow chart illustrating an exemplary process by which an exemplary ignition of hydrogen jets 13 can pass through the secondary wake region 11 and interact with at least one first wake 12c of a first wake region 12b as the hydrogen undergoes combustion and the mixture of air and fuel output from the outlet 5b of the outer conduit undergoes combustion of the fuel as this mixture crosses into the discharge region 14 of the outlet 7b of the inner hydrogen injection conduit 7.

DETAILED DESCRIPTION OF EXEMPLARY EMBODIMENTS

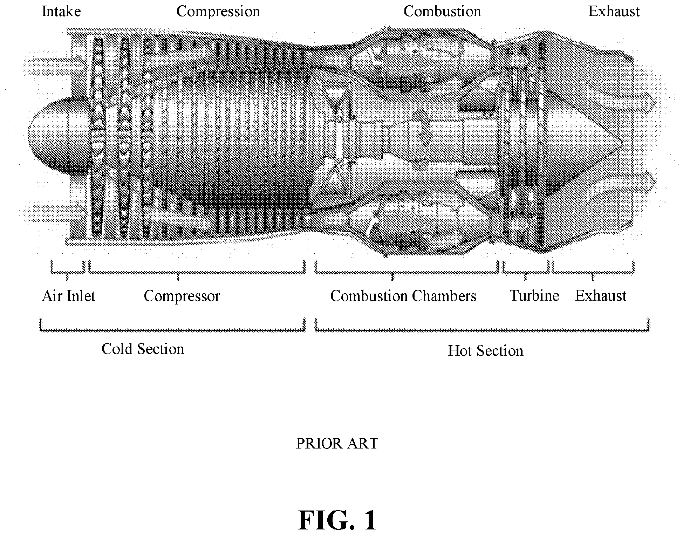

Referring to Figures 4-14, a hydrogen injection arrangement 1 can be included in a gas turbine system, such as the turbine system shown in Figure 1 utilizing a multiple can or annular can combustion section arrangement (examples of which are shown in Figures 2 and 3). In other embodiments, the hydrogen injection arrangement 1 can be included into a turbine system that utilizes a different type of combustor section. The inclusion of the hydrogen injection arrangement 1 can be provided as part of a retrofit operation of a pre-existing gas turbine system or can be incorporated into a new design for a new gas turbine system or combustor for such a system that is to be installed at an industrial power plant or other type of plant.

As may best be seen from Figures 4 and 5, the hydrogen injection arrangement 1 can include an injector assembly that includes an outer conduit 5 configured to feed a flow of a mixture of air and fuel 3a (which can also be referred to as an air-fuel mixture) to the combustion chamber 2a of a combustor. The combustion chamber 2a can be defined by a combustion liner 2 of a combustor of a gas turbine system. The combustion chamber 2a provides a combustion space in which combustion of fuel can occur to generate a hot gas for outputting to a turbine of the gas turbine system. At least one swirler 3 can be positioned in the outer conduit 5 to facilitate a swirling flow of the air-fuel mixture 3a to be output into the combustion chamber 2a so that the output mixture of fuel and air includes a swirling output flow 12 of the air-fuel mixture that is injected into the combustion chamber 2a to flow along a pre-selected discharge path therein for combustion of the fuel within the combustion chamber 2a.

The one or more swirlers 3 can be positioned in the outer conduit 5 of the hydrogen injection arrangement 1 to swirl air before it is mixed with fuel. As may best be appreciated from Figure 5, the fuel can be fed to the air within the outer conduit 5 downstream of the swirler 3 and upstream of the outer conduit outlet 5b at which the mixture of fuel and air 3a is fed into the combustion chamber 2a. The mixture of fuel and air 3a within the outer conduit 5 that is formed can be considered an "Air-Fuel Premix" flow as the air and fuel are mixed before they are output into the combustion chamber for combustion of the fuel within the combustion chamber (e.g. they undergo pre-mixing within the outer conduit between the swirler 3 and the outlet of the outer conduit 5 at which the swirling mixture of air and fuel is fed into the combustion chamber 2a).

A flow of hydrogen can be passed through an inner hydrogen injection conduit 7 for output into the combustion chamber 2a for injection therein as a hydrogen injection flow. The hydrogen injection flow can be output at the outlet 7b of the inner hydrogen injection conduit 7 as at least one jet of hydrogen 13 (e.g. a single jet 13 or multiple jets 13). In some embodiments, the outlet 7b for the inner hydrogen injection conduit 7 can be structured as a nozzle having a single output orifice or a nozzle having multiple output orifices. The outlet 7b of the inner hydrogen injection conduit 7 can be positioned inwardly relative to the outlet 5b of the outer conduit 5 such that the outlet 5b of the outer conduit 5 can be around an outer periphery of the outlet 7b of the inner hydrogen injection conduit 7. For instance, the outlet 5b of the outer conduit 5 can surround the entire periphery of the outlet 7b of the inner hydrogen injection conduit 7 and the inner hydrogen injection conduit 7 can be arranged so its outlet 7b is positioned at a location that is inward relative to the outlet 5b of the outer conduit that is positioned around the periphery of the outlet 7b of the inner hydrogen injection conduit 7. Embodiments can utilize any number of arrangements for the outlets of the inner hydrogen injection conduit 7 and outer conduit 5.

In some embodiments, the outlet 7b of the inner hydrogen injection conduit 7 can be located in a central region or in a center of an annular opening of an annular shaped outlet 5b of the outer conduit 5. The annular shaped opening of the outlet 5b of the outer conduit 5 can be a slot-like shape, a cross shape, an "x" like shape, a "Y" like shape, a "T" like shape, a "W" like shape, a "Z" like shape, an "N" like shape, an "M" like shape, an "F" like shape, an "E" like shape, a "D" like shape, a "C" like shape, a "U" like shape, a "V" like shape, a circular shape, an oval shape, a polygonal shape, or another type of shape. The outlet 7b of the inner hydrogen injection conduit can include a central orifice having a shape that matches the shape of the annular shaped opening of the outlet 5b of the outer conduit 5 and is positioned within the annular opening of the outlet 5b of the outer conduit 5.

In some configurations, there can be one or more other conduits arranged between the inner hydrogen injection conduit 7 and the outer conduit 5. For example, an annular shaped water injection conduit (not shown) can be positioned between the inner hydrogen injection conduit 7 and the outer conduit 5. As another example an annular shaped purge air conduit can be positioned between the inner hydrogen injection conduit 7 and the outer conduit 5. As yet another example, an annular shaped water injection conduit (not shown) as well as an annular shaped purge air conduit can be positioned between the inner hydrogen injection conduit 7 and the outer conduit 5.

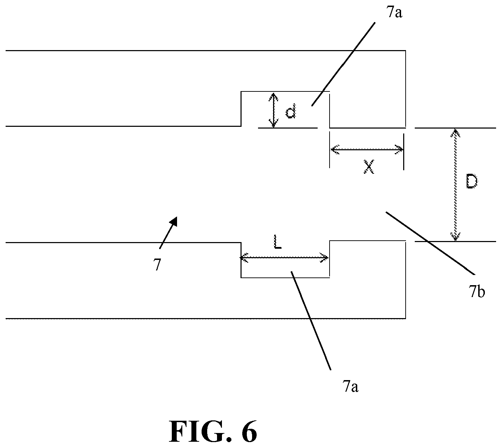

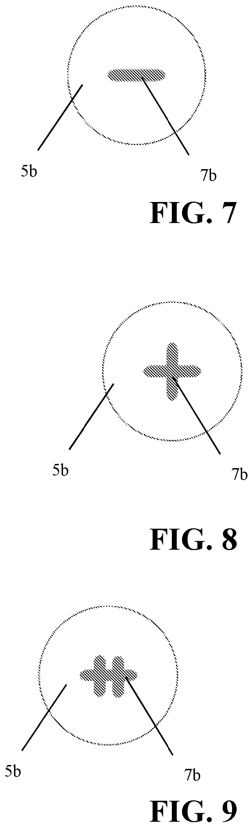

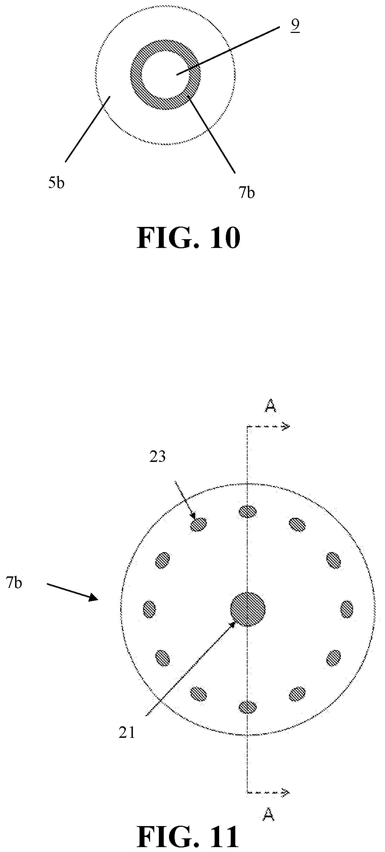

Different exemplary outlet configurations for the outlet 5b of the outer conduit 5 and the outlet 7b of the inner hydrogen conduit 7 that are configured to be in fluid communication with the combustion chamber 2a of a combustor of a gas turbine system can be appreciated from Figures 7-10. These different configurations can include, for example, a slot (Figure 7), cross, (Figure 8), zipper (Figure 9), or annular (Figure 10) type design. Yet other outlet configurations can be appreciated from Figures 6 and 11-13 as well as the other examples discussed herein.

For example, as can be appreciated from Figures 6-10, the outlet 7b for the inner hydrogen injection conduit 7 can be a uniform circular or other shape single orifice outlet. The inner hydrogen injection conduit can include at least one intermediate cavity 7a that is positioned upstream of the outlet 7b within the inner hydrogen injection conduit 7. Each cavity 7a can be positioned to adjust a velocity of the hydrogen injection flow as it passes through the inner hydrogen injection conduit 7 towards its outlet 7b so that the flow of the hydrogen over the cavity excites a periodic secondary flow within the cavity that acts to increase the level of turbulence of the hydrogen flow. We have found this cavity excitation and increase in hydrogen jet turbulence to be effective in increasing the rate of jet spreading and momentum transfer of the hydrogen jet with its surroundings as it discharges into the combustion chamber 2a.

Each cavity 7a can be positioned to help magnify jet-wake mass and momentum transport of one or more hydrogen jets 13 injected into the combustion chamber via the outlet 7b of the inner hydrogen injection conduit (as compared to a circular nozzle without such a cavity 7a or without multiple such cavities 7a). Each cavity 7a that is defined in the inner hydrogen injection conduit 7 can include a cavity depth d, a cavity length L, and a cavity trailing edge distance X, which is a distance between the downstream end of the cavity 7a and the outlet 7b. The outlet 7b can be circular in shape and have a diameter D, which is the diameter of the circular orifice through which the hydrogen passes to be directly fed into the combustion chamber 2a.

As may best be appreciated from Figure 6, each cavity 7a can be configured to have a particular depth d and length L and also be positioned to have a particular cavity trailing edge distance X from the outlet 7b of the inner hydrogen injection conduit 7. The cavity depth d is preferably less than the diameter D of a circular orifice of the outlet 7b. In some embodiments, the cavity depth d can be greater than or equal to the radius of the orifice of the outlet 7b and also be less than or equal to the diameter D of the orifice of the outlet 7b (e.g. $D/2 \leq d \leq D$). The cavity length L can be selected so that the length L is a value so that the ratio of length L to depth d is between 1 and 4 (e.g. $1 \leq L/d \leq 4$). The cavity trailing edge distance X can be selected so that the ratio of the cavity trailing edge distance X to the diameter D of the outlet 7b is no more than 5 (e.g. $x/D \leq 5$). We have determined that embodiments that utilize the cavity dimensional specifications are often able to provide an improved wake mass and momentum transport that is desirable for the hydrogen injection within the combustion chamber 2a - particularly (but not exclusively) when utilized in conjunction with a uniform sized single orifice outlet 7b for the inner hydrogen injection conduit 7. The hydrogen output from the outlet 7b can be output as a hydrogen jet 13 of hydrogen gas that can be output at a pre-selected injection flow rate. The speed of the hydrogen jet 13 can be equal to or greater than 100 m/s, greater than or equal to 300 m/s, or a flow velocity that is up to the local speed of sound of hydrogen through the injector orifice defining the hydrogen gas outlet 7b.

The outlet 7b for the inner hydrogen injection conduit 7 can also be configured to have multiple spaced apart orifices for injection of hydrogen gas jets 13 into the combustion chamber 2a. It should be appreciated that each jet 13 of the hydrogen gas that is injected can be a flow of hydrogen gas that is output at a relatively high speed velocity. In some of these embodiments, the velocity of each jet can be equal to or greater than 100 m/s, greater than or equal to 300 m/s, or a flow velocity that is up to the local speed of sound of hydrogen through the injector orifice of the nozzle defining the outlet 7b.

The outlet 7b having a nozzle configuration to provide multiple jets 13 of hydrogen gas for injection into the combustion chamber 2a can be configured to have multiple injection zones. The injection zones can include a first central injection zone having at least one central injection jet of hydrogen 13a that is directed in a direction that is parallel to an axis of the burner 4 (e.g. an axial flow direction along which the flow of fuel, air and hydrogen pass through the outer conduit 5 and inner hydrogen injection conduit 7 for being injected into the combustion chamber 2a). In some embodiments, the first zone may just have a single central orifice 21. However, it is contemplated that other embodiments could include multiple spaced apart central orifices 21 for providing a first zone of multiple central injection jets of hydrogen 13a.

The hydrogen gas injection zones for the nozzle defining the outlet 7b can also include a second zone. The second zone can be configured so that there are multiple second zone injection orifices 23 arranged along an outer circumference surrounding a periphery of at least one first zone central orifice 21 through which the at least one central injection jet of hydrogen 13a is output into the combustion chamber 2a. The second zone injection orifices 23 can be positioned to output non-central jets of hydrogen 13b so each of these jets are output at an angle $\Theta$ of greater than 0° and less than 90° relative to the axis of the burner 4 (e.g. non-axial flow directions) and/or a non-zero angle relative to the flow direction of a central injection jet of hydrogen 13a such that the non-central jet of hydrogen 13b is output in a flow direction that flows at an angle to the flow direction of the central jet of hydrogen 13a at an angle $\Theta$ that is greater than 0° and less than 90°. The outer second zone orifices 23 can be arranged so that the angle $\Theta$ at which the non-central jets of hydrogen 13b are output can range from greater than 0° to less than 90°, or more preferably can range from greater than or equal to 15° and less than or equal to 60°. Of course, outer second zone orifices 23 can be arranged and configured so that the angle Θ at which the non-central jets of hydrogen 13b are output can be within a different range, such as, for example, a range of greater than or equal to 10° and less than or equal to 70°, a range of greater than or equal to 5° and less than or equal to 80°, or some other range that may better meet a particular set of design criteria and the particular wake flow dynamics that may be present in a particular combustion chamber 2a for a particular operation of a gas turbine system.

In some embodiments, the one or more first zone central orifices 21 can emit one or more jets of hydrogen 13a so that they all flow in an axial direction and the outer second zone orifices 23 can emit the non-central jets of hydrogen 13b so that they all flow in non-axial directions. In other embodiments, the at least one first zone central orifice 21 and outer second zone orifices 23 can be arranged and configured so that at least one jet of hydrogen 13a can flow in an axial direction at least some of the non-central jets of hydrogen 13b can be output so that they flow in one or more non-axial directions.

The spaced apart peripheral second zone injection orifices 23 can be positioned so that a series of these orifices extend around a periphery of the at least one first zone central orifice 21 so that an entirety of the periphery is surrounded by the spaced apart second zone injection orifices 23 (an example of which may best be seen from Figure 11) or at least a portion of the periphery of the at least one first zone central orifice 21 is surrounded by the second zone injection orifices 23. In yet other embodiments, an outlet 7b for the inner hydrogen injection conduits 7, can be configured to only include outer injection orifices 23 such that there is no central injection jet of hydrogen 13a nor any first zone central zone orifice 21 defined in the outlet 7b.

The outlet 7b of the inner hydrogen injection conduit 7 be configured so that the one or more jets of hydrogen 13 interact with the prevailing flow field 12a generated by the swirling output flow 12 of the mixture of air and fuel output from the outlet 5b of the outer conduit 5 when that output flow 12 crosses the discharge region 14 of the outlet 7b of the inner hydrogen injection conduit 7 within the combustion chamber 2a at a location that is spaced apart from and downstream of the outlet 7b. For example, the prevailing flow field 12a can be generated from the swirling flow of the mixture of fuel and air swirling within the combustion chamber 2a and passing across and in front of the outlet 7b of the inner hydrogen injection conduit 7a at a position within the discharge region 14 that is spaced apart and downstream from the outlet 7b that is within the combustion chamber 2a. This position within the discharge region 14 can be a location within the combustion chamber 2a or a region within the combustion chamber 2a. A first wake region 12b of fluid can have at least one first wake 12c that is generated by this swirling flow of the mixture of air and fuel as the fuel combusts inside the combustion chamber 2a adjacent to and/or in the discharge region 14 of the inner hydrogen injection conduit 7 as the output flow 12 crosses the discharge region 14.

The hydrogen injected into the combustion chamber 2a via the outlet 7b of the inner hydrogen injection conduit 7 can mix with the air and fuel as well as combustion products (e.g. $CO_2$, $CO$, water vapor, etc.) from combustion of the fuel that can be directed into the discharge region 14 of the inner hydrogen injection conduit 7 within the combustion chamber 2a as a result of the first wake(s) 12c of fluid formed via combustion of the fuel occurring in the prevailing flow field 12a within the first wake region 12b adjacent the discharge region 14 of the inner hydrogen injection conduit 7. The hydrogen can combust when mixing with the air and generate a secondary wake region 11 in the discharge region 14 of the inner hydrogen injection conduit 7 between the location at which the prevailing flow field 12a of the air-fuel mixture crosses the discharge region 14 of the inner hydrogen injection conduit 7 within the combustion chamber 2a and the outlet 7b of the inner hydrogen injection conduit 7.

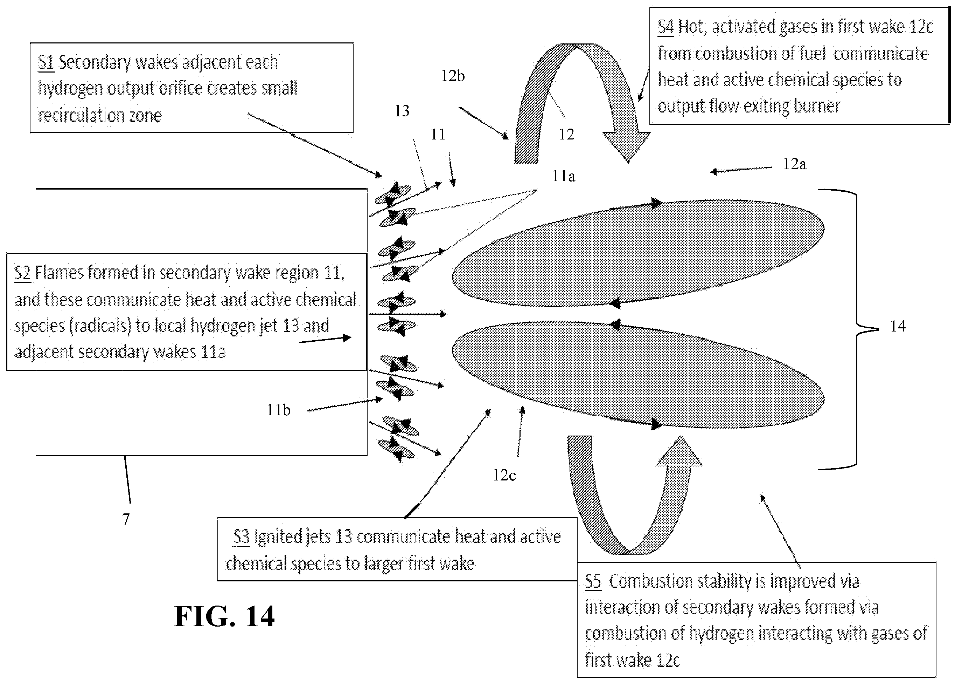

As may best be seen from Figures 13 and 14, the combustion of the hydrogen within the one or more jets 13 of hydrogen can generate an array of small flame structures 11b that forms via fluid and chemical communication between secondary wakes 11a of adjacent jets of hydrogen within the discharge region 14. The secondary wakes 11a can also be referred to as second wakes.

The secondary wakes 11a can be formed within the combustion chamber 2a between the first wake region 12b and the outlet 7b of the inner hydrogen conduit and also between the position at which the mixture of fuel and air within the swirling output flow 12 of the mixture of air and fuel crosses the discharge region 13 of the outlet 7b of the inner hydrogen injection conduit 7 within the combustion chamber 2a and the outlet 7b of the inner hydrogen injection conduit 7.

The small flame structures 11b can be provided by the relatively high nozzle velocity hydrogen jets 13, which can create a multiplicity of secondary jet wake flows 11a that can each entrain lean premix air-natural gas reactants and hot products of combustion into the hydrogen jet 13 for combustion of the hydrogen in the combustion chamber 2a to form the small flame structures 11b in the flows of the secondary jet wakes 11a. These small flame structures 11b can help provide improved mixing of air and fuel due to the combustion of the hydrogen while also helping to transport heat from the combustion away from the burner 4 due to the transport of momentum provided by the velocity of the hydrogen jets in combination with the combustion of the hydrogen to form the flame structures. The combustion of hydrogen within the secondary wake region 11 can help avoid zones of decreased mixing of air and fuel to mitigate or avoid combustion instability from the fuel combusting in the combustion chamber.

For example, the interaction of the hydrogen combusting in a secondary wake region 11 located in the combustion chamber 2a can help improve flame stability of the burner 4 and combustion stability within the combustion chamber 2a. For instance, the one or more central injection jets of hydrogen 13a can be output in a flow direction that is opposed to the streamline of the reverse flow field generated by the swirling output flow 12 of the mixture of air and fuel output from the outlet 5b of the outer conduit 5 of the burner 4 generated via the one or more swirlers 3 of the burner 4 can interact with this first wake region inside the combustion chamber 2a. A detailed nature of this flow interaction between the injected hydrogen and the swirling flow of the air-fuel mixture can be dependent on the relative momenta of the hydrogen jet(s) 13 and the recirculated flow along the jet burner axis. However, We have determined that the presence of high shear rates, high turbulence intensity, and opposing flows can provide an efficient method by which mixing and subsequent combustion can occur that provide viable energy and chemical radical species as a result of the combustion which is then communicated fluidically through the first wake recirculation flow to the peripheral hydrogen jets, if present, as well as the swirling flow of air and fuel from the main burner as the mixture of air and fuel enters into the combustion space via the outlet 5b of the outer conduit.

Hydrogen introduced into the combustion chamber 2a via the outer injector orifices 23 can further enhance such an effect to help provide a further improvement in lean combustion stability. The divergent non-central jets of hydrogen 13b that can be output in flow directions that are nominally parallel to the shear layer between the toroidal recirculation vortex and the swirling flow 12 of the air-fuel mixture discharging from the outlet 5b of the outer conduit 5 can create a multiplicity of diffusion flames whose reaction rates are augmented due to the presence of the hydrogen as well as the heat and radicals convected from the reaction zone of the central hydrogen jet(s) 13a. The combustion of the hydrogen and its interaction with the swirling flow 12 of the mixture of air and fuel can help improve combustion stability within the combustion space of the combustion chamber 2a when the air-fuel mixture is a lean mixture having an excess of oxygen relative to the fuel within the mixture (e.g. there is more oxygen within the mixture than needed to fully combust the fuel within the flow).

Figure 14 further illustrates the interaction between the injected hydrogen and the output mixture of fuel and air from the burner 4 in an exemplary interaction process that can result from the operation of the exemplary burner 4 having the outer conduit 5 and the inner hydrogen injection conduit 7. The secondary wake region 11 can include at least one secondary wake 11a adjacent each hydrogen output orifice, which can create one or more small recirculation zones within the secondary wake region 11 in a first step S1 of the exemplary process. Flames, or flame structures 11b, formed in secondary wake region 11 can communicate heat and active chemical species (e.g. radicals) to local hydrogen jet 13 and adjacent secondary wakes 11a in a second step S2 of the exemplary process. The ignited jets 13 can communicate heat and active chemical species to the larger at least one first wake 12c formed from the fuel combusting in the combustion chamber 2a as it is output from the outlet 5b of the outer conduit 5 and passes across the discharge region 14 of the outlet 7b of the inner hydrogen injection conduit 7 in a third step S3 of the exemplary process. The hot, activated gases in the first wake(s) 12c from combustion of the fuel can communicate heat and active chemical species to the output flow exiting burner 4 in a fourth step S4 of the exemplary process. The interaction between the first wake(s) 12c and second wakes 11a of the secondary wake region 11 can facilitate improved combustion stability as a consequence of the combustion of hydrogen interacting with combustion gases of the first wake(s) 12c in a fifth step S5 of the exemplary process. This interaction can include, for example, activated gas in the one or more first wakes 12c from combustion of fuel communicating heat and active chemical species with the one or more second wakes 11a.

We believe the improved combustion stability and gas turbine system performance that can be provided by embodiments of my hydrogen injection arrangement 1 is due to a number of factors. For instance, We believe that the kinetic energy of each relatively high velocity hydrogen jet 13 can act as a pump that can entrain local mass in proportion to its velocity while generating local turbulence within the combustion chamber 2a that enhances mixing. The enhanced mixing can help reduce temperature stratifications; which can lower peak flame temperatures and thereby reduce $NO_x$ emissions. As another example, We believe that the high velocity hydrogen injection jet(s) 13 can help to convectively transport the heat released during the combustion of the hydrogen so that this heat is transported away from the nozzle, which can prevent nozzle overheating.

Embodiments of the hydrogen injection arrangement 1 that utilize multiple hydrogen jets 13 can provide relatively high nozzle velocity hydrogen jets to create a multiplicity of secondary jet wake flows 11a that can each entrain lean premix air-natural gas reactants and hot products of combustion into the hydrogen jet. Due to the low ignition energy of hydrogen, the excess oxygen available in the entrained mass and the elevated temperature of combustion products, the hydrogen - entrained gas mixture is readily ignited within the relatively low velocity secondary wake region 11 within the combustion chamber 2a - which can be a region near the outlet of the burner 4 that is located upstream of where the swirling flow 12 of the air-fuel mixture output from the outlet 5b of the outer conduit 5 may pass within the combustion chamber as it is injected therein such that this secondary wake region 11 is between the outlet 7b of the inner hydrogen injection conduit 7 and the region within the combustion chamber that is axially spaced apart from the outlet within the combustion chamber at which the swirling flow 12 output from the outer conduit's outlet 5b will pass.

The multiplicity of secondary wake ignition sources that can be provided by the multiple jets 13 of injected hydrogen (e.g. hydrogen injected via first zone and second zone orifices 21 and 23, etc.) can generate an array of small flame structures within the combustion chamber 2a in the secondary wake region 11 that each act as a miniature "pilot" flame to adjacent hydrogen jets 13. We have determined that this can provide a synergistic effect among adjacent hydrogen jets 13 that can unexpectedly provide a much higher level of flame stability as compared to use of a single hydrogen jet 13 of the same mass flow rate as the cumulative sum of flow rates from the multiple hydrogen jets 13.

'In some embodiments, the central (axial) injection of hydrogen that can be provided by the at least one central injection jet 13a of hydrogen can be output so this central jet can mix with recirculated gases in the wake of the burner 4 at or below an equivalence ratio of unity, which can be an operational mode in which the mixture thus created in the burner wake within the combustion chamber 2a remains stoichiometric or lean. Hydrogen injected above the stoichiometric amount can constitute an excess reactant that can become diluted in its effect as it mixes with other gases outside the burner wake. Expressed mathematically, assuming that the ratio of hydrogen to a fuel flow rate is much less than unity, it can be shown that this ratio is equal to:

$$\frac{m, H2, central, max}{m, Fuel} \approx 0.5 * \left[ \frac{m, recirc}{m, total} \right] * \left[ \frac{1 - \Phi}{\Phi} \right]$$

Where $m,H2,central,max$ is the maximum allowable central hydrogen injection mass flow rate; $m,Fuel$ is the burner fuel flow rate, $m,recirc$ is the mass flow recirculation (i.e. reverse flow) rate in the burner first wake region; $m,total$ is the total burner flow rate and $\Phi$ is the equivalence ratio accounting for only air and fuel injected through the burner. It should be understood that the recirculation gas flow rate ($m,recirc$) can be a function of the main premix burner swirl number and average axial injection velocity that may either be estimated by empirical correlation (available in the public domain) or via computational fluid dynamics modeling.

For embodiments in which the fuel is methane ($CH_4$), the $m,Fuel$ variable would be the mass flow rate of methane injected into the combustion chamber 2a via the outlet 5b of the outer conduit 5. Of course, this fuel flow rate value may be different depending on the type of fuel utilized in the combustion chamber 2a as the fuel could alternatively be propane, liquefied petroleum gas, fuel oil, No. 2 fuel oil, kerosene, or a synthetic gas made from another type of fuel (e.g. carbon, etc.) or another type of suitable fuel.

Embodiments of the hydrogen injection arrangement 1 can be configured for utilization in gas turbine systems to provide a co-firing of hydrogen with a primary fuel (e.g. natural gas, propane, liquefied petroleum gas, No. 2 fuel oil, kerosene, synthetic gases made from other fuels, etc.). The hydrogen injection arrangement 1 can be utilized to facilitate different types of operation of the gas turbine system. For instance, the arrangement can be utilized to help lower the overall combustor stoichiometric ratio utilized during operation of the gas turbine system. As another example, the hydrogen injection arrangement 1 can be utilized to help facilitate an increased combustor axial fuel staging.

For instance, the hydrogen injection arrangement 1 can be employed to use the hydrogen for lowering the overall equivalence ratio of the combustor relative to the low equivalence ratio limit attainable without hydrogen injection (based on hydrogen, primary fuel and air flow rates, where the primary fuel can be the fuel included in the mixture of fuel and air output into the combustion chamber via the outer conduit 5). This can occur by the injected hydrogen offsetting the ratio of fuel to available oxygen to provide for an increased proportion of oxygen so that a lower equivalence ratio for the combustion occurring within the combustion space of the combustor chamber 2a. An objective of such an operational strategy for a gas turbine system can be to either facilitate extended turbine load reduction and/or to lower combustor $NO_x$ emissions without increasing carbon monoxide (CO) emissions. It can be shown that the relationship among the reactant flow rates for this operational case is equal to:

$$mH2, total < \left( \frac{\beta prim}{\beta H2} \right) * Mair * \left( \frac{MH2}{Mprim} \right) * (PFR0 - PFR1)$$

where:

$mH2, total$ is the total hydrogen injection rate;
$\beta prim$ is the molar, air-fuel stoichiometric coefficient for the primary fuel (Note: for methane as the primary fuel, $\beta$prim can be equal to 9.52);
$\beta H2,$ is the molar, air-fuel stoichiometric coefficient for hydrogen, which is equal to 2.38; $Mair$ is the molecular weight of air;
$MH2$ is the molecular weight of hydrogen;
$Mprim$ is the molecular weight of the primary fuel;
$PFR0$ is the primary fuel to air mass flow ratio prior to hydrogen injection; and
$PFR1$ is the primary fuel to air mass flow ratio during hydrogen injection.

The injection of hydrogen can be controlled so that the operation of one or more of the combustors of the gas turbine system (or all of the combustors of the gas turbine system) is constrained by the above relationship to control operations of the gas turbine system and/or the combustor(s):

Hydrogen injection can also (or alternatively) be employed via an exemplary embodiment of the hydrogen injection arrangement 1 to facilitate a larger magnitude staging of fuel or air for $NO_x$ reduction purposes in a gas turbine combustor of a gas turbine system. For example, with fuel-staged combustion, fuel can be diverted away from the outlet of the burner 4 and introduced at a downstream location of the combustor. Figure 5, may best illustrate such a configuration as at least one control valve 30 of a fuel feed system for the combustor can be configured to permit a portion of the fuel feed to flow to the outer conduit 5 for pre-mixing with air for being output from the outlet 5b of the outer conduit while another portion of the fuel can be routed for being fed into the combustor chamber 2a downstream of the burner 4. In such situations, the main burner 4 of the combustor can run with a lower equivalence ratio than would be employed without fuel staging. The degree of fuel staging is in many cases limited by lean combustion stability limits of the main burner 4. By utilization of hydrogen injection via an embodiment of my hydrogen injection arrangement 1, the burner's lean combustion safe operating limit can be extended, which can drive a greater $NO_x$ reduction by increasing the proportion of axially-staged fuel.

It should be appreciated that modifications to the embodiments explicitly shown and discussed herein can be made to meet a particular set of design objectives or a particular set of design criteria. For example, embodiments of the hydrogen injection arrangement 1 can utilize a single output orifice or multiple output orifices for injecting one or more jets of hydrogen gas into the combustion chamber at a pre-selected flow rate or a flow rate within a pre-selected hydrogen injection flow rate range. In some embodiments, such a range may be less than 100 m/s or less than 300 m/s. In yet other embodiments such a range can be higher than 100 m/s or higher than 300 m/s.

As another example, the size and shape of the inner hydrogen injection conduit 7 and outer conduit 5 can be any type of suitable size and shape to meet a particular set of design criteria for the operational performance of a particular gas turbine system. For instance, some embodiments may be quite large while others can be smaller to account for the size of the combustor in which it is to be utilized and the operational requirements for that combustor.

As yet another example, embodiments of the hydrogen injection arrangement 1 can be configured to inject one or more jets 13 of hydrogen that is 100% hydrogen gas or that has another composition (e.g. more than 80% hydrogen gas by volume and less than 20% other gases by volume, etc.). Other gas elements that can be included in the hydrogen gas jets 13 can include nitrogen or carbon dioxide, for example. It should be appreciated that the injected hydrogen jet(s) 13 can include a composition of hydrogen that is at least 99% by volume hydrogen, at least 95% by volume hydrogen, at least 90% by volume hydrogen, at least 75% by volume hydrogen, or at least 50% by volume hydrogen. The particular composition of the hydrogen jet flow rate utilized in a particular embodiment of the hydrogen injection arrangement may depend on the source of the hydrogen being injected and other operational or design criteria for the gas turbine system.

The gas turbine system as well as the hydrogen injection arrangement 1 that can be incorporated into the system can be configured to include process control elements positioned and configured to monitor and control operations (e.g. temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the system, etc.).

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of a hydrogen injection arrangement, an apparatus for hydrogen injection within a combustor, a combustor for a gas turbine system, a gas turbine system, and methods of making and using the same have been shown and described above, it is to be distinctly understood that the invention is not limited thereto but may be otherwise variously embodied and practiced within the scope of the following claims.

## Claims

1. A method of injecting hydrogen into a combustion chamber (2a) of a combustor of a gas turbine system, the method comprising:

   outputting a mixture of fuel and air (3a) into the combustion chamber (2a) via an outlet (5b) of an outer conduit (5) in fluid communication with the combustion chamber (2a);
   injecting at least one jet of hydrogen (13) into the combustion chamber (2a) via an outlet (7b) of an inner hydrogen injection conduit (7) that is in fluid communication with the combustion chamber (2a), and
   the outer conduit (5) being positioned such that the outlet (5b) of the outer conduit (5) is around an outer periphery of the outlet (7b) of the inner hydrogen injection conduit (7), wherein a burner (4) of the combustor includes the outer conduit (5),

**characterized in that** the injecting of the at least one jet of hydrogen (13) into the combustion chamber (2a) via the outlet (7b) of the inner hydrogen injection conduit (7) is performed to control operation of the gas turbine so that a ratio of hydrogen to fuel flow rate is provided so that an equivalence ratio for the combustor is equal to:

$$\frac{m, H2, central, max}{m, Fuel} \approx 0.5 * \left[\frac{m, recirc}{m, total}\right] * \left[\frac{1-\Phi}{\Phi}\right]$$

where:

m,H2,central,max is a maximum allowable central hydrogen injection mass flow rate;
m,Fuel is a fuel flow rate of the fuel for the burner,
m,recirc is a mass flow recirculation rate in a first wake region of the burner;
m, total is a total burner flow rate; and
$\Phi$ is the equivalence ratio accounting for only the air and the fuel injected through the outlet of the outer conduit.

2. The method of claim 1, wherein the at least one jet of hydrogen (13) is injected into a secondary wake region (11) within the combustion chamber (2a) that is downstream of the outlet (7b) of the inner hydrogen injection conduit (7) and upstream of a position within the combustion chamber (2a) at which the mixture of fuel and air (3a) output from the outlet (5b) of the outer (5) conduit crosses a discharge region (14) of the outlet (7b) of the inner hydrogen injection conduit (7) within the combustion chamber (2a).

3. The method of claim 2, comprising:

generating a swirl of air via at least one swirler (3) to generate a swirling flow for the mixture of air and fuel prior to outputting the mixture of air and fuel from the outlet (7b) of the outer conduit (7); and
wherein the secondary wake region (11) is between the outlet (7b) of the inner hydrogen injection conduit (7) and the position within the combustion chamber (2a) at which the mixture of fuel and air (3a) output from the outlet (5b) of the outer conduit (5) crosses the outlet (7b) of the inner hydrogen injection conduit (7) while the fuel of the mixture combusts in the combustion chamber (2a).

4. The method of claim 1, wherein the outlet (7b) of the inner hydrogen injection conduit (7) is a single orifice and the inner hydrogen injection conduit (7) has at least one cavity (7a) upstream of the single orifice.

5. The method of claim 4, wherein the at least one cavity (7a) has a depth (d), a cavity length (L), and a cavity trailing edge distance (X), which is a distance a downstream end of the cavity (7a) is from the outlet (7b) of the inner hydrogen injection conduit (7);

the cavity depth (d) being greater than or equal to a radius of the orifice of the outlet (7b) of the inner hydrogen injection conduit (7) and also be less than or equal to a diameter (D) of the orifice of the outlet (7b) of the inner hydrogen injection conduit (7);
the cavity length (L) being a value so that a ratio of the length (L) to the depth (d) is between 1 and 4;
the cavity trailing edge distance (X) being a value so that a ratio of the cavity trailing edge distance (X) to the diameter (D) is no more than 5.

6. The method of claim 1, wherein the at least one jet of hydrogen (13) is at least one central jet of hydrogen (13a) and the outlet (7b) of the inner hydrogen injection conduit (7) includes a nozzle with at least one central orifice to form the at least one central jet of hydrogen (13a) to inject hydrogen into the combustion chamber (2a) and multiple outer orifices to form multiple non-central jets of hydrogen (13b) to inject hydrogen into the combustion chamber (2a), the method also comprising:
injecting the non-central jets of hydrogen (13b) into the combustion chamber (2a) via the outer orifices of the nozzle.

7. The method of claim 6, wherein the outer orifices are configured so that each of the non-central jets of hydrogen (13b) are output in a flow direction that flows at an angle to a flow direction of the at least one central jet of hydrogen (13a), the angle being greater than 0° and less than 90° or greater than 15° and less than 60°, or wherein the at least one central jet of hydrogen (13a) has a velocity of at least 100 m/s and each of the non-central jets of hydrogen (13b) have a velocity that is at least 100 m/s.

8. The method of claim 1, wherein the at least one jet of hydrogen (13) has a velocity of at least 100 m/s, or wherein a burner (4) of the combustor includes the outer conduit (5) and the injecting of the at least one jet of hydrogen (13) into the combustion chamber (2a) via the outlet (7b) of the inner hydrogen injection conduit (7) is performed to control operation of the gas turbine so that operation of the combustor of the gas turbine system is constrained by:

$$mH2, total < \left(\frac{\beta prim}{\beta H2}\right) * Mair * \left(\frac{MH2}{Mprim}\right) * (PFR0 - PFR1)$$

where:

mH2,total is a total hydrogen injection rate;
βprim is a molar, air-fuel stoichiometric coefficient for the fuel;
βH2, is a molar, air-fuel stoichiometric coefficient for hydrogen;
Mair is a molecular weight of air;
MH2 is a molecular weight of hydrogen;
Mprim is a molecular weight of the fuel;
PFRO is a fuel to air mass flow ratio prior to hydrogen injection; and
PFR1 is a fuel to air mass flow ratio during hydrogen injection.

9. The method of claim 1, comprising:

generating a swirl of air via at least one swirler (3) to generate a swirling flow for the mixture of air and fuel (3a) prior to outputting the mixture of air and fuel (3a) from the outlet (5b) of the outer conduit (5); and
passing the swirling flow within the combustion chamber (2a) to a position at which the mixture of fuel and air (3a) within the swirling flow crosses a discharge region (14) of the outlet (7b) of the inner hydrogen injection conduit (7) within the combustion chamber (2a);
wherein the at least one jet of hydrogen is injected into a secondary wake region (11) within the combustion chamber (2a) that is downstream of the outlet (7b) of the inner hydrogen injection conduit (7) and upstream of the position within the combustion chamber (2a) at which the mixture of fuel and air (3a) within the swirling flow crosses the discharge region (14) of the outlet (7b) of the inner hydrogen injection conduit (7); and
wherein the secondary wake region (11) is between the outlet (7b) of the inner hydrogen injection conduit (7) and the position within the combustion chamber (2a) at which the mixture of fuel and air (3a) within the swirling flow crosses the discharge region (14) of the outlet (7b) of the inner hydrogen injection conduit (7), the secondary wake region (11) having at least one second wake (11a) that interacts with at least one first wake (12c) within a first wake region (12b) generated by the swirling flow of the mixture of air and fuel (3a) as the fuel combusts inside the combustion chamber (2a).

10. The method of claim 9, wherein activated gas from combustion of fuel in the at least one first wake (12c) communicates heat and active chemical species with the at least one second wake (11a).

11. A method of injecting hydrogen into a combustion chamber (2a) of a combustor of a gas turbine system, the method comprising:

outputting a mixture of fuel and air (3a) into the combustion chamber (2a) via an outlet (5b) of an outer conduit (5) in fluid communication with the combustion chamber (2a);
injecting at least one jet of hydrogen (13) into the combustion chamber (2a) via an outlet (7b) of an inner hydrogen injection conduit (7) that is in fluid communication with the combustion chamber (2a), and
the outer conduit (5) being positioned such that the outlet (5b) of the outer conduit (5) is around an outer periphery of the outlet (7b) of the inner hydrogen injection conduit (7),

wherein the at least one jet of hydrogen (13) is injected into a first wake region (12b) within the combustion chamber (2a) that is downstream of the outlet (7b) of the inner hydrogen injection conduit (7) and upstream of a position within the combustion chamber (2a) at which the mixture of fuel and air (3a) output from the outlet (5b) of the outer conduit (5) crosses a discharge region (14) of the outlet (7b) of the inner hydrogen injection conduit (7) within the combustion chamber (2a),
wherein the method utilizes a hydrogen injection arrangement (1) for injecting hydrogen into a combustion chamber (2a) of a combustor of a gas turbine system,

the hydrogen injection arrangement (1) comprising:

an outer conduit (5) having an outlet (5b) in fluid communication with the combustion chamber (2a), the outer conduit (5) configured so that a mixture of fuel and air (3a) is passable into the combustion chamber (2a) via the outlet (5b) of the outer conduit (5), and

an inner hydrogen injection conduit (7) positioned adjacent to the outer conduit (5), the outer conduit (5) being positioned such that the outlet (5b) of the outer conduit (5) is around an outer periphery of an outlet (7b) of the inner hydrogen injection conduit (7) that is in fluid communication with the combustion chamber (2a), the inner hydrogen injection conduit (7) configured such that at least one jet of hydrogen (13) is injectable into the combustion chamber (2a) via the outlet (7b) of the inner hydrogen injection conduit (7),

wherein a burner (4) of the combustor includes the outer conduit (5), **characterized in that** the injecting of the at least one jet of hydrogen (13) into the combustion chamber (2a) via the outlet (7b) of the inner hydrogen injection conduit (7) is performed to control operation of the gas turbine so that operation of the combustor of the gas turbine system is constrained by:

$$mH2, total < \left(\frac{\beta prim}{\beta H2}\right) * Mair * \left(\frac{MH2}{Mprim}\right) * (PFR0 - PFR1)$$

where:

$mH2,total$ is a total hydrogen injection rate;
$\beta prim$ is a molar, air-fuel stoichiometric coefficient for the fuel;
$\beta H2,$ is a molar, air-fuel stoichiometric coefficient for hydrogen;
$Mair$ is a molecular weight of air;
$MH2$ is a molecular weight of hydrogen;
$Mprim$ is a molecular weight of the fuel;
$PFRO$ is a fuel to air mass flow ratio prior to hydrogen injection; and
$PFR1$ is a fuel to air mass flow ratio during hydrogen injection.

## Patentansprüche

1. Verfahren zum Einspritzen von Wasserstoff in eine Verbrennungskammer (2a) einer Verbrennungseinrichtung eines Gasturbinensystems, wobei das Verfahren umfasst:

Ausgeben einer Brennstoff-Luft-Mischung (3a) in die Verbrennungskammer (2a) über einen Auslass (5b) einer äußeren Leitung (5), die in einer Fluidverbindung mit der Verbrennungskammer (2a) steht, und

Einspritzen wenigstens eines Wasserstoffstrahls (13) in die Verbrennungskammer (2a) über einen Auslass (7b) einer inneren Wasserstoff-Einspritzleitung (7), die in einer Fluidverbindung mit der Verbrennungskammer (2a) steht,

wobei die äußere Leitung (5) derart angeordnet ist, dass der Auslass (5b) der äußeren Leitung (5) um einen Außenumfang des Auslasses (7b) der inneren Wasserstoffeinspritzleitung (7) herum angeordnet ist, wobei ein Brenner (4) der Verbrennungseinrichtung die äußere Leitung (5) umfasst,

**dadurch gekennzeichnet, dass** das Einspritzen des wenigstens einen Wasserstoffstrahls (13) in die Verbrennungskammer (2a) über den Auslass (7b) der inneren Wasserstoffeinspritzleitung (7) durchgeführt wird, um den Betrieb der Gasturbine derart zu steuern, dass das Verhältnis des Wasserstoffs zu der Brennstoffflussrate so vorgesehen wird, dass das Äquivalenzverhältnis für die Verbrennungseinrichtung gleich Folgendem ist:

$$\frac{m, H2, central, max}{m, Fuel} \approx 0.5 * \left[\frac{m, recirc}{m, total}\right] * \left[\frac{1 - \Phi}{\Phi}\right]$$

wobei:

$m,H2,central,max$ die maximal zulässige mittige Massenflussrate des Wasserstoffeinspritzens ist,
$m,Fuel$ die Brennstoffflussrate des Brennstoffs für den Brenner ist,

*m,recirc* die Massenfluss-Rezirkulationsrate in einem ersten Nachlaufbereich des Brenners ist,

*m,total* die Brenner-Gesamtflussrate ist, und

$\Phi$ das Äquivalenzverhältnis ist, das nur die Luft und den Brennstoff, die durch den Auslass der äußeren Leitung eingespritzt werden, berücksichtigt.

2. Verfahren nach Anspruch 1, wobei der wenigstens eine Wasserstoffstrahl (13) in einen sekundären Nachlaufbereich (11) in der Verbrennungskammer (2a) eingespritzt wird, der stromabwärts von dem Auslass (7b) der inneren Wasserstoffeinspritzleitung (7) und stromaufwärts von einer Position in der Verbrennungskammer (2a), an der die von dem Auslass (5b) der äußeren Leitung (5) ausgegebene Brennstoff-Luft-Mischung (3a) einen Ausführbereich (14) des Auslasses (7b) der inneren Wasserstoffeinspritzleitung (7) in der Verbrennungskammer (2a) kreuzt, angeordnet ist.

3. Verfahren nach Anspruch 2, das umfasst:

Erzeugen eines Wirbels von Luft mittels wenigstens eines Wirblers (3), um einen Wirbelfluss für die Brennstoff-Luft-Mischung vor dem Ausgeben der Brennstoff-Luft-Mischung von dem Auslass (7b) der äußeren Leitung (7) zu erzeugen, und

wobei der sekundäre Nachlaufbereich (11) zwischen dem Auslass (7b) der inneren Wasserstoffeinspritzleitung (7) und der Position in der Verbrennungskammer (2a), an der die von dem Auslass (5b) der äußeren Leitung (5) ausgegebene Brennstoff-Luft-Mischung (3a) den Auslass (7b) der inneren Wasserstoffeinspritzleitung (7) während des Verbrennens des Brennstoffes aus der Mischung in der Verbrennungskammer (2a) kreuzt, angeordnet ist.

4. Verfahren nach Anspruch 1, wobei der Auslass (7b) der inneren Wasserstoffeinspritzleitung (7) eine einzelne Öffnung ist und die innere Wasserstoffeinspritzleitung (7) wenigstens einen Hohlraum (7a) stromaufwärts von der einzelnen Öffnung aufweist.

5. Verfahren nach Anspruch 4, wobei der wenigstens eine Hohlraum (7a) eine Tiefe (d), eine Hohlraumlänge (L) und eine Hintere-Hohlraumkante-Distanz (X), die eine Distanz zwischen einem stromabwärts gelegenen Ende des Hohlraums (7a) von dem Auslass (7b) der inneren Wasserstoffeinspritzleitung (7) ist, aufweist,

wobei die Hohlraumtiefe (d) größer oder gleich dem Radius der Öffnung des Auslasses (7b) der inneren Wasserstoffeinspritzleitung (7) ist und auch kleiner oder gleich dem Durchmesser (D) der Öffnung des Auslasses (7b) der inneren Wasserstoffeinspritzleitung (7) ist,

wobei die Hohlraumlänge (L) einen derartigen Wert aufweist, dass das Verhältnis zwischen der Länge (L) und der Tiefe (d) zwischen 1 und 4 beträgt,

wobei die Hintere-Hohlraumkante-Distanz (X) einen derartigen Wert aufweist, dass das Verhältnis zwischen der Hintere-Hohlraumkante-Distanz (X) zu dem Durchmesser (D) nicht mehr als 5 beträgt.

6. Verfahren nach Anspruch 1, wobei der wenigstens eine Wasserstoffstrahl (13) wenigstens ein mittiger Wasserstoffstrahl (13a) ist und der Auslass (7b) der inneren Wasserstoffeinspritzleitung (7) eine Düse mit wenigstens einer mittigen Öffnung für das Bilden des wenigstens einen mittigen Wasserstoffstrahls (13a) für das Einspritzen von Wasserstoff in die Verbrennungskammer (2a) und mit mehreren äußeren Öffnungen für das Bilden von mehreren nicht-mittigen Wasserstoffstrahlen (13b) für das Einspritzen von Wasserstoff in die Verbrennungskammer (2a) umfasst, wobei das Verfahren weiterhin umfasst:
Einspritzen der nicht-mittigen Wasserstoffstrahlen (13b) in die Verbrennungskammer (2a) über die äußeren Öffnungen der Düse.

7. Verfahren nach Anspruch 6, wobei die äußeren Öffnungen derart konfiguriert sind, dass jeder der nicht-mittigen Wasserstoffstrahlen (13b) in einer Flussrichtung ausgegeben wird, die mit einem Winkel zu der Flussrichtung des wenigstens einen mittigen Wasserstoffstrahls (13a) fließt, wobei der Winkel größer als 0° und kleiner als 90° oder größer als 15° und kleiner als 60° ist oder wobei der wenigstens eine mittige Wasserstoffstrahl (13a) eine Geschwindigkeit von wenigstens 100 m/s aufweist und jeder der nicht-mittigen Wasserstoffstrahlen (13b) eine Geschwindigkeit von wenigstens 100 m/s aufweist.

8. Verfahren nach Anspruch 1, wobei der wenigstens eine Wasserstoffstrahl (13) eine Geschwindigkeit von wenigstens 100 m/s aufweist oder wobei ein Brenner (4) der Verbrennungseinrichtung die äußere Leitung (5) umfasst, und wobei das Einspritzen des wenigstens einen Wasserstoffstrahls (13) in die Verbrennungskammer (2a) über den Auslass (7b) der inneren Wasserstoffeinspritzleitung (7) durchgeführt wird, um den Betrieb der Gasturbine derart zu steuern, dass der Betrieb der Verbrennungseinrichtung der Gasturbine beschränkt wird durch:

$$mH2, total < \left(\frac{\beta prim}{\beta H2}\right) * Mair * \left(\frac{MH2}{Mprim}\right) * (PFR0 - PFR1)$$

wobei:

$mH2,total$ die Wasserstoff-Gesamteinspritzrate ist,
$\beta prim$ ein molarer stöchiometrischer Brennstoff-Luft-Koeffizient für den Brennstoff ist,
$\beta HS$ ein molarer stöchiometrischer Brennstoff-Luft-Koeffizient für Wasserstoff ist,
$Mair$ das Molekulargewicht der Luft ist,
$MH2$ das Molekulargewicht von Wasserstoff ist,
$Mprim$ das Molekulargewicht des Brennstoffs ist,
$PFR0$ ein Brennstoff-zu-Luft-Massenflussverhältnis vor der Wasserstoffeinspritzung ist, und
$PFR1$ ein Brennstoff-zu-Luft-Massenflussverhältnis während der Wasserstoffeinspritzung ist.

9. Verfahren nach Anspruch 1, aufweisend:

Erzeugen eines Luftwirbels mittels wenigstens eines Wirblers (3) für das Erzeugen eines Wirbelflusses für die Brennstoff-Luft-Mischung (3a) vor dem Ausgeben der Brennstoff-Luft-Mischung (3a) von dem Auslass (5b) der äußeren Leitung (5), und
Führen des Wirbelflusses in der Verbrennungskammer (2a) zu einer Position, an der die Brennstoff-Luft-Mischung (3a) in dem Wirbelfluss einen Ausführbereich (14) des Auslasses (7b) der inneren Wasserstoffeinspritzleitung (7) in der Verbrennungskammer (2a) kreuzt,
wobei der wenigstens eine Wasserstoffstrahl in einen sekundären Nachlaufbereich (11) in der Verbrennungskammer (2a) eingespritzt wird, der stromabwärts von dem Auslass (7b) der inneren Wasserstoffeinspritzleitung (7) und stromaufwärts von der Position in der Verbrennungskammer (2a), an der die Brennstoff-Luft-Mischung (3a) in dem Wirbelfluss den Ausführbereich (14) des Auslasses (7b) der inneren Wasserstoffeinspritzleitung (7) kreuzt, angeordnet ist,
wobei der sekundäre Nachlaufbereich (11) zwischen dem Auslass (7b) der inneren Wasserstoffeinspritzleitung (7) und der Position in der Verbrennungskammer (2a), an der die Brennstoff-Luft-Mischung (3a) in dem Wirbelfluss den Ausführbereich (14) des Auslasses (7b) der inneren Wasserstoffeinspritzleitung (7) kreuzt, angeordnet ist, wobei der sekundäre Nachlaufbereich (11) wenigstens einen sekundären Nachlauf (11a) aufweist, der mit wenigstens einem ersten Nachlauf (12c) in einem ersten Nachlaufbereich (12b), der durch den Wirbelfluss der Brennstoff-Luft-Mischung (3a) während des Verbrennens des Brennstoffs in der Verbrennungskammer (2a) erzeugt wird, interagiert.

10. Verfahren nach Anspruch 9, wobei aktiviertes Gas von der Verbrennung von Brennstoff in dem wenigstens einen Nachlauf (12c) Wärme und aktive chemische Spezies mit dem wenigstens einen zweiten Nachlauf (11a) austauscht.

11. Verfahren zum Einspritzen von Wasserstoff in eine Verbrennungskammer (2a) einer Verbrennungseinrichtung eines Gasturbinensystems, wobei das Verfahren umfasst:

Ausgeben einer Brennstoff-Luft-Mischung (3a) in die Verbrennungskammer (2a) über einen Auslass (5b) einer äußeren Leitung (5), die in einer Fluidverbindung mit der Verbrennungskammer (2a) steht, und
Einspritzen wenigstens eines Wasserstoffstrahls (13) in die Verbrennungskammer (2a) über einen Auslass (7b) einer inneren Wasserstoffeinspritzleitung (7), die in einer Fluidverbindung mit der Verbrennungskammer (2a) steht,
wobei die äußere Leitung (5) derart angeordnet ist, dass der Auslass (5b) der äußeren Leitung (5) um einen Außenumfang des Auslasses (7b) der inneren Wasserstoffeinspritzleitung (7) herum angeordnet ist, wobei der wenigstens eine Wasserstoffstrahl (13) in einen ersten Nachlaufbereich (12b) in der Verbrennungskammer (2a) eingespritzt wird, der stromabwärts von dem Auslass (7b) der inneren Wasserstoffeinspritzleitung (7) und stromaufwärts von einer Position in der Verbrennungskammer (2a), an der die von dem Auslass (5b) der äußeren Leitung (5) ausgegebene Brennstoff-Luft-Mischung (3a) einen Ausführbereich (14) des Auslasses (7b) der inneren Wasserstoffeinspritzleitung (7) in der Verbrennungskammer (2a) kreuzt, angeordnet ist,
wobei das Verfahren eine Wasserstoffeinspritzanordnung (1) für das Einspritzen von Wasserstoff in eine Verbrennungskammer (2a) einer Verbrennungseinrichtung eines Gasturbinensystems verwendet, wobei die Wasserstoffeinspritzanordnung (1) umfasst:

eine äußere Leitung (5) mit einem Auslass (5b), der in einer Fluidverbindung mit der Verbrennungskammer (2a) steht, wobei die äußere Leitung (5) derart konfiguriert ist, dass eine Brennstoff-Luft-Mischung (3a) über den Auslass (5b) der äußeren Leitung (5) in die Verbrennungskammer (2a) geführt werden kann, und eine innere Wasserstoffeinspritzleitung (7), die in Nachbarschaft zu der äußeren Leitung (5) angeordnet ist, wobei die äußere Leitung (5) derart angeordnet ist, dass der Auslass (5b) der äußeren Leitung (5) um einen Außenumfang eines Auslasses (7b) der inneren Wasserstoffeinspritzleitung (7), die in einer Fluidverbindung mit der Verbrennungskammer (2a) steht, herum angeordnet ist, wobei die innere Wasserstoffeinspritzleitung (7) derart konfiguriert ist, dass wenigstens ein Wasserstoffstrahl (13) über den Auslass (7b) der inneren Wasserstoffeinspritzleitung (7) in die Verbrennungskammer (2a) eingespritzt werden kann, wobei ein Brenner (4) der Verbrennungseinrichtung die äußere Leitung (5) umfasst, **dadurch gekennzeichnet, dass** das Einspritzen des wenigstens einen Wasserstoffstrahls (13) in die Verbrennungskammer (2a) über den Auslass (7b) der inneren Wasserstoffeinspritzleitung (7) durchgeführt wird, um den Betrieb der Gasturbine derart zu steuern, dass der Betrieb der Verbrennungseinrichtung der Gasturbine durch Folgendes beschränkt wird:

$$mH2, total < \left( \frac{\beta prim}{\beta H2} \right) * Mair * \left( \frac{MH2}{Mprim} \right) * (PFR0 - PFR1)$$

wobei:

$mH2,total$ die Wasserstoff-Gesamteinspritzrate ist,
$\beta prim$ ein molarer stöchiometrischer Brennstoff-Luft-Koeffizient für den Brennstoff ist,
$\beta HS$ ein molarer stöchiometrischer Brennstoff-Luft-Koeffizient für Wasserstoff ist,
$Mair$ das Molekulargewicht der Luft ist,
$MH2$ das Molekulargewicht von Wasserstoff ist,
$Mprim$ das Molekulargewicht des Brennstoffs ist,
$PFRO$ ein Brennstoff-zu-Luft-Massenflussverhältnis vor der Wasserstoffeinspritzung ist, und
$PFR1$ ein Brennstoff-zu-Luft-Massenflussverhältnis während der Wasserstoffeinspritzung ist.

## Revendications

1. Procédé d'injection d'hydrogène dans une chambre de combustion (2a) d'un dispositif de combustion d'un système de turbine à gaz, le procédé comprenant :

l'envoi d'un mélange de carburant et d'air (3a) dans la chambre de combustion (2a) via une sortie (5b) d'un conduit extérieur (5) en communication fluidique avec la chambre de combustion (2a) ;
l'injection d'au moins un jet d'hydrogène (13) dans la chambre de combustion (2a) via une sortie (7b) d'un conduit intérieur (7) d'injection d'hydrogène qui est en communication fluidique avec la chambre de combustion (2a), et le conduit extérieur (5) étant positionné de telle sorte que la sortie (5b) du conduit extérieur (5) entoure une périphérie extérieure de la sortie (7b) du conduit intérieur (7) d'injection d'hydrogène, un brûleur (4) du dispositif de combustion incluant le conduit extérieur (5), **caractérisé en ce que** l'injection de l'au moins un jet d'hydrogène (13) dans la chambre de combustion (2a) via la sortie (7b) du conduit intérieur (7) d'injection d'hydrogène est effectuée pour commander le fonctionnement de la turbine à gaz de telle sorte qu'un rapport entre le débit d'hydrogène et le débit de carburant soit fourni de telle sorte qu'un rapport d'équivalence pour le dispositif de combustion soit égal à :

$$\frac{m, H2, central, max}{m, Fuel} \approx 0.5 * \left[ \frac{m, recirc}{m, total} \right] * \left[ \frac{1 - \Phi}{\Phi} \right]$$

où :

$m,H2,central,max$ est un débit massique maximal autorisé pour l'injection centrale d'hydrogène ;

m,Fuel est un débit de carburant du carburant pour le brûleur,

m, recirc est un taux de recirculation du débit massique dans une première zone de sillage du brûleur ;

m, total est un débit total du brûleur ; et

$\phi$ est le rapport d'équivalence qui tient compte uniquement de l'air et du carburant injectés à la sortie du conduit extérieur.

2. Procédé selon la revendication 1, dans lequel l'au moins un jet d'hydrogène (13) est injecté dans une région de sillage secondaire (11) à l'intérieur de la chambre de combustion (2a) qui est en aval de la sortie (7b) du conduit intérieur (7) d'injection d'hydrogène et en amont d'une position à l'intérieur de la chambre de combustion (2a) à laquelle le mélange de carburant et d'air (3a) sortant de la sortie (5b) du conduit extérieur (5) traverse une région de décharge (14) de la sortie (7b) du conduit intérieur (7) d'injection d'hydrogène à l'intérieur de la chambre de combustion (2a).

3. Procédé selon la revendication 2, comprenant :

la génération d'un tourbillon d'air via au moins une coupelle de turbulence (3) afin de générer un flux tourbillonnant pour le mélange d'air et de carburant avant d'évacuer le mélange d'air et de carburant de la sortie (7b) du conduit extérieur (7) ; et

dans lequel la région de sillage secondaire (11) se situe entre la sortie (7b) du conduit intérieur (7) d'injection d'hydrogène et la position dans la chambre de combustion (2a) à laquelle le mélange de carburant et d'air (3a) sortant de la sortie (5b) du conduit extérieur (5) traverse la sortie (7b) du conduit intérieur (7) d'injection d'hydrogène tandis que le carburant du mélange brûle dans la chambre de combustion (2a).

4. Procédé selon la revendication 1, dans lequel la sortie (7b) du conduit intérieur (7) d'injection d'hydrogène est un orifice unique et le conduit intérieur (7) d'injection d'hydrogène comporte au moins une cavité (7a) en amont de l'orifice unique.

5. Procédé selon la revendication 4, dans lequel l'au moins une cavité (7a) a une profondeur (d), une longueur de cavité (L), et une distance (X) de bord de fuite de cavité, qui est une distance entre une extrémité aval de la cavité (7a) et la sortie (7b) du conduit intérieur (7) d'injection d'hydrogène ;

la profondeur (d) de la cavité étant supérieure ou égale à un rayon de l'orifice de la sortie (7b) du conduit intérieur (7) d'injection d'hydrogène et étant également inférieure ou égale à un diamètre (D) de l'orifice de la sortie (7b) du conduit intérieur (7) d'injection d'hydrogène ;

la longueur (L) de la cavité étant une valeur telle qu'un rapport entre la longueur (L) et la profondeur (d) est compris entre 1 et 4 ;

la distance (X) du bord de fuite de la cavité étant une valeur telle qu'un rapport entre la distance (X) du bord de fuite de la cavité et le diamètre (D) n'est pas supérieur à 5.

6. Procédé selon la revendication 1, dans lequel l'au moins un jet d'hydrogène (13) est au moins un jet central d'hydrogène (13a) et la sortie (7b) du conduit intérieur (7) d'injection d'hydrogène inclut une buse avec au moins un orifice central pour former l'au moins un jet central d'hydrogène (13a) pour injecter de l'hydrogène dans la chambre de combustion (2a) et de multiples orifices extérieurs pour former de multiples jets non centraux d'hydrogène (13b) pour injecter de l'hydrogène dans la chambre de combustion (2a), le procédé comprenant également :

l'injection des jets non centraux d'hydrogène (13b) dans la chambre de combustion (2a) via les orifices extérieurs de la buse.

7. Procédé selon la revendication 6, dans lequel les orifices extérieurs sont configurés de telle sorte que chacun des jets non centraux d'hydrogène (13b) sortent dans une direction d'écoulement faisant un angle avec une direction d'écoulement de l'au moins un jet central d'hydrogène (13a), l'angle étant supérieur à 0° et inférieur à 90° ou supérieur à 15° et inférieur à 60°, ou dans lequel l'au moins un jet central d'hydrogène (13a) a une vitesse d'au moins 100 m/s et chacun des jets non centraux d'hydrogène (13b) a une vitesse qui est d'au moins 100 m/s.

8. Procédé selon la revendication 1,
dans lequel l'au moins un jet d'hydrogène (13) a une vitesse d'au moins 100 m/s, ou dans lequel un brûleur (4) du dispositif de combustion inclut le conduit extérieur (5) et l'injection de l'au moins un jet d'hydrogène (13) dans la chambre de combustion (2a) via la sortie (7b) du conduit intérieur (7) d'injection d'hydrogène est effectuée pour commander le fonctionnement de la turbine à gaz de telle sorte que le fonctionnement du dispositif de combustion du système de turbine à gaz soit limité par :

$$mH2, total < \left(\frac{\beta prim}{\beta H2}\right) * Mair * \left(\frac{MH2}{Mprim}\right) * (PFR0 - PFR1)$$

où :

$mH2,total$ est un taux d'injection d'hydrogène total ;

$\beta prim$ est un coefficient stœchiométrique molaire air-carburant pour le carburant ;

$\beta H2$ est un coefficient stœchiométrique molaire air-carburant pour l'hydrogène ;

$Mair$ est un poids moléculaire de l'air ;

$MH2$ est un poids moléculaire de l'hydrogène ;

$Mprim$ est un poids moléculaire du carburant ;

$PFR0$ est un rapport entre le débit massique du carburant et celui de l'air avant l'injection d'hydrogène ; et

$PFR1$ est un rapport entre le débit massique du carburant et celui de l'air pendant l'injection d'hydrogène.

9. Procédé selon la revendication 1, comprenant :

la génération d'un tourbillon d'air via au moins une coupelle de turbulence (3) afin de générer un flux tourbillonnant pour le mélange d'air et de carburant (3a) avant d'évacuer le mélange d'air et de carburant (3a) par la sortie (5b) du conduit extérieur (5) ; et

le passage du flux tourbillonnant dans la chambre de combustion (2a) jusqu'à une position où le mélange de carburant et d'air (3a) dans le flux tourbillonnant traverse une zone de décharge (14) de la sortie (7b) du conduit intérieur (7) d'injection d'hydrogène à l'intérieur de la chambre de combustion (2a) ;

l'au moins un jet d'hydrogène étant injecté dans une région de sillage secondaire (11) à l'intérieur de la chambre de combustion (2a) qui est en aval de la sortie (7b) du conduit intérieur (7) d'injection d'hydrogène et en amont de la position à l'intérieur de la chambre de combustion (2a) à laquelle le mélange de carburant et d'air (3a) dans l'écoulement tourbillonnant traverse la région de décharge (14) de la sortie (7b) du conduit intérieur (7) d'injection d'hydrogène ; et

la région de sillage secondaire (11) se situant entre la sortie (7b) du conduit intérieur (7) d'injection d'hydrogène et la position dans la chambre de combustion (2a) à laquelle le mélange de carburant et d'air (3a) dans l'écoulement tourbillonnant traverse la région de décharge (14) de la sortie (7b) du conduit intérieur (7) d'injection d'hydrogène, la région de sillage secondaire (11) comportant au moins un deuxième sillage (11a) qui interagit avec au moins un premier sillage (12c) dans une première région de sillage (12b) générée par l'écoulement tourbillonnant du mélange d'air et de carburant (3a) lorsque le carburant brûle à l'intérieur de la chambre de combustion (2a).

10. Procédé selon la revendication 9, selon lequel le gaz activé provenant de la combustion du carburant dans l'au moins un premier sillage (12c) communique de la chaleur et des espèces chimiques actives avec l'au moins un deuxième sillage (11a).

11. Procédé d'injection d'hydrogène dans une chambre de combustion (2a) d'un dispositif de combustion d'un système de turbine à gaz, le procédé comprenant :

l'envoi d'un mélange de carburant et d'air (3a) dans la chambre de combustion (2a) via une sortie (5b) d'un conduit extérieur (5) en communication fluidique avec la chambre de combustion (2a) ;

l'injection d'au moins un jet d'hydrogène (13) dans la chambre de combustion (2a) via une sortie (7b) d'un conduit intérieur (7) d'injection d'hydrogène qui est en communication fluidique avec la chambre de combustion (2a), et le conduit extérieur (5) étant positionné de telle sorte que la sortie (5b) du conduit extérieur (5) se trouve autour d'une périphérie extérieure de la sortie (7b) du conduit intérieur (7) d'injection d'hydrogène, au moins un jet d'hydrogène (13) étant injecté dans une première région de sillage (12b) à l'intérieur de la chambre de combustion (2a) qui est en aval de la sortie (7b) du conduit intérieur (7) d'injection d'hydrogène et en amont d'une position à l'intérieur de la chambre de combustion (2a) à laquelle le mélange de carburant et d'air (3a) sortant de la sortie (5b) du conduit extérieur (5) traverse une région de décharge (14) de la sortie (7b) du conduit intérieur (7) d'injection d'hydrogène à l'intérieur de la chambre de combustion (2a),

le procédé utilisant un agencement (1) d'injection d'hydrogène pour injecter de l'hydrogène dans une chambre de combustion (2a) d'un dispositif de combustion d'un système de turbine à gaz,

l'agencement (1) d'injection d'hydrogène comprenant :

un conduit extérieur (5) ayant une sortie (5b) en communication fluidique avec la chambre de combustion (2a), le conduit extérieur (5) étant configuré de telle sorte qu'un mélange de carburant et d'air (3a) puisse passer dans la chambre de combustion (2a) via la sortie (5b) du conduit extérieur (5), et

un conduit intérieur (7) d'injection d'hydrogène positionné à côté du conduit extérieur (5), le conduit extérieur (5) étant positionné de telle sorte que la sortie (5b) du conduit extérieur (5) entoure une périphérie extérieure d'une sortie (7b) du conduit intérieur (7) d'injection d'hydrogène qui est en communication fluidique avec la chambre de combustion (2a), le conduit intérieur (7) d'injection d'hydrogène étant configuré de telle sorte qu'au moins un jet d'hydrogène (13) puisse être injecté dans la chambre de combustion (2a) via la sortie (7b) du conduit intérieur (7) d'injection d'hydrogène,

un brûleur (4) du dispositif de combustion incluant le conduit extérieur (5),

**caractérisé en ce que** l'injection de l'au moins un jet d'hydrogène (13) dans la chambre de combustion (2a) via la sortie (7b) du conduit intérieur (7) d'injection d'hydrogène est effectuée pour commander le fonctionnement de la turbine à gaz de telle sorte que le fonctionnement du dispositif de combustion du système de turbine à gaz soit limité par :

$$mH2, total < \left(\frac{\beta prim}{\beta H2}\right) * Mair * \left(\frac{MH2}{Mprim}\right) * (PFR0 - PFR1)$$

où :

$mH2,total$ est un taux d'injection d'hydrogène total ;
$\beta prim$ est un coefficient stœchiométrique molaire air-carburant pour le carburant ;
$\beta H2$ est un coefficient stœchiométrique molaire air-carburant pour l'hydrogène ;
$Mair$ est un poids moléculaire de l'air ;
$MH2$ est un poids moléculaire de l'hydrogène ;
$Mprim$ est un poids moléculaire du carburant ;
$PFR0$ est un rapport entre le débit massique du carburant et celui de l'air avant l'injection d'hydrogène ; et
$PFR1$ est un rapport entre le débit massique du carburant et celui de l'air pendant l'injection d'hydrogène.

Intake     Compression          Combustion          Exhaust

Air Inlet     Compressor     Combustion Chambers     Turbine   Exhaust

Cold Section                    Hot Section

PRIOR ART

**FIG. 1**

Compressor outlet elbow flange joint
Main fuel manifold
Engine fireseal
Combustion chamber
Air casing
Drain tube
Interconnector
Primary fuel manifold
Primary air scoop

PRIOR ART

# FIG. 2

Outer air casing  Dilution air holes  Turbine mounting flange

Inner air casing

Nozzle guide vanes

Flame tube

Interconnector

Swirl vanes

Primary air scoop

Igniter plug

Diffuser case

PRIOR ART

# FIG. 3

FIG. 4

FIG. 5

**FIG. 6**

5b            7b

**FIG. 7**

5b            7b

**FIG. 8**

5b            7b

**FIG. 9**

**FIG. 10**

**FIG. 11**

**FIG. 12**

**FIG. 13**

**S1** Secondary wakes adjacent each hydrogen output orifice creates small recirculation zone

**S4** Hot, activated gases in first wake 12c from combustion of fuel communicate heat and active chemical species to output flow exiting burner

12b

13

11

12

11a

12a

**S2** Flames formed in secondary wake region 11, and these communicate heat and active chemical species (radicals) to local hydrogen jet 13 and adjacent secondary wakes 11a

14

11b

12c

7

**S3** Ignited jets 13 communicate heat and active chemical species to larger first wake

**S5** Combustion stability is improved via interaction of secondary wakes formed via combustion of hydrogen interacting with gases of first wake 12c

**FIG. 14**

**EP 4 298 382 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 67813422
- US 63153620
- WO 2019222334 A
- EP 2902708 A1